# EUROPÄISCHE PATENTSCHRIFT

(11) **EP 0 658 393 B1**
(45) Veröffentlichungstag und Bekanntmachung des Hinweises auf die Patenterteilung: **09.04.1997**
(21) Anmeldenummer: 94117663.8
(22) Anmeldetag: 09.11.1994
(51) Int. Cl.: B23K 9/32, B23K 9/173

(54) **Schweissvorrichtung**
Welding device
Dispositif de soudage

(30) Priorität: 17.12.1993 DE 9319418 U
(43) Veröffentlichungstag der Anmeldung: 21.06.1995
(73) Patentinhaber: Wilhelm Merkle Schweissmaschinenbau GmbH, D-89359 Kötz (DE)
(72) Erfinder: Hafner, Josef, D-89312 Günzburg-Denzingen (DE)
(74) Vertreter: Munk, Ludwig, Dipl.-Ing.

(56) Entgegenhaltungen:
- DE-A- 2 650 522
- DE-A- 2 739 351
- DE-A- 4 032 095
- DE-U- 8 605 423
- DE-U- 9 319 418

## Beschreibung

Die Erfindung betrifft eine Schweißvorrichtung, insbesondere eine Schutzgasschweißvorrichtung, mit einem eine Drahtvorschubeinrichtung enthaltenden Basisgerät, das über ein an einem eine Wandausnehmung des Gehäuses des Basisgeräts durchgreifenden, hiergegen isolierten Zentralanschluß anschließbares Schlauchpaket mit einem Schweißbrenner verbindbar ist (siehe z.B. DE-A-40 32 095).

Bei den bekannten Anordnungen dieser Art ist die Drahtvorschubeinrichtung mit Abstand von der vom Zentralanschluß durchgriffenen Gehäusewand am Gehäuse des Basisgeräts befestigt. Der die Zugeordnete Gehäusewand durchgreifende Zentralanschluß ist mit einem langen, rückwärtigen Schraubenschaft versehen, der den Abstand zur Drahtvorschubeinrichtung überbrückt und an einer zugeordneten Haltelasche der Drahtvorschubeinrichtung mit Hilfe von zwei Muttern verstellbar festlegbar ist. Die hier vorgesehene Einstellbarkeit des Abstands des Zentralanschlusses von der Drahtvorschubeinrichtung ist notwendig, um Toleranzen hinsichtlich des Wandabstands der Drahtvorschubeinrichtung ausgleichen zu können. Die genannte Einstellbarkeit erfordert aber auch einen nicht unerheblichen Einstellaufwand, wodurch sich die Montagekosten erhöhen.

Hiervon ausgehend ist es daher die Aufgabe der vorliegenden Erfindung, eine Vorrichtung eingangs erwähnter Art mit einfachen und kostengünstigen Mitteln so zu verbessern, daß keine Justierung des Zentralanschlusses erforderlich wird.

Diese Aufgabe wird erfindungsgemäß dadurch gelöst, daß der Zentralanschluß und die Drahtvorschubeinrichtung gegeneinander unverstellbar zu einer Baueinheit verbunden sind, die mittels eines zentralanschlußseitig vorgesehenen Befestigungsflansches unter Zwischenschaltung einer Isoliereinrichtung an das Gehäuse des Basisgeräts anflanschbar ist.

Die aus Drahtvorschubeinrichtung und Zentralanschluß bestehende Baueinheit kann in vorteilhafter Weise komplett vormontiert und anschließend einfach im zusammengesetzten Zustand in das Gehäuse des Basisgeräts eingesetzt werden, wobei durch die Wandanlage des Befestigungsflansches sichergestellt ist, daß der Zentralanschluß stets die richtige Position zur zugeordneten Gehäusewand einnimmt.

Mit Hilfe der erfindungsgemäßen Maßnahmen wird daher die gestellte Aufgabe auf einfache und kostengünstige Weise gelöst.

Vorteilhafte Ausgestaltungen und zweckmäßige Fortbildungen der übergeordneten Maßnahmen sind den Unteransprüchen angegeben. So kann der den Befestigungsflansch tragende Zentralanschluß zweckmäßig an ein die Drahtvorschubeinrichtung aufnehmendes Lagerschild unverrückbar angesetzt sein. Diese zweiteilige Bauweise ergibt eine hohe Variationsmöglichkeit hinsichtlich der Größe der der zum Einsatz kommenden Drahtvorschubeinrichtung und ermöglicht damit eine einfache Anpassung an die Verhältnisse des Einzelfalls unter Verwendung ein- und desselben Zentralanschlusses.

Eine andere, vorteilhafte Ausgestaltung kann darin bestehen, daß der Befestigungsflansch, der Zentralanschluß und ein die Drahtvorschubeinrichtung aufnehmendes Lagerschild einteilig ausgebildet sind. Hierbei ist sichergestellt, daß jeder Aufwand zum Zusammenbau der mit Hilfe des Befestigungsflansches an das Gehäuse anflanschbaren Baueinheit unterbleibt.

Weitere vorteilhafte Ausgestaltungen und zweckmäßige Fortbildungen der übergeordneten Maßnahmen sind in den restlichen Unteransprüchen angegeben und aus der nachstehenden Beispielsbeschreibung entnehmbar.

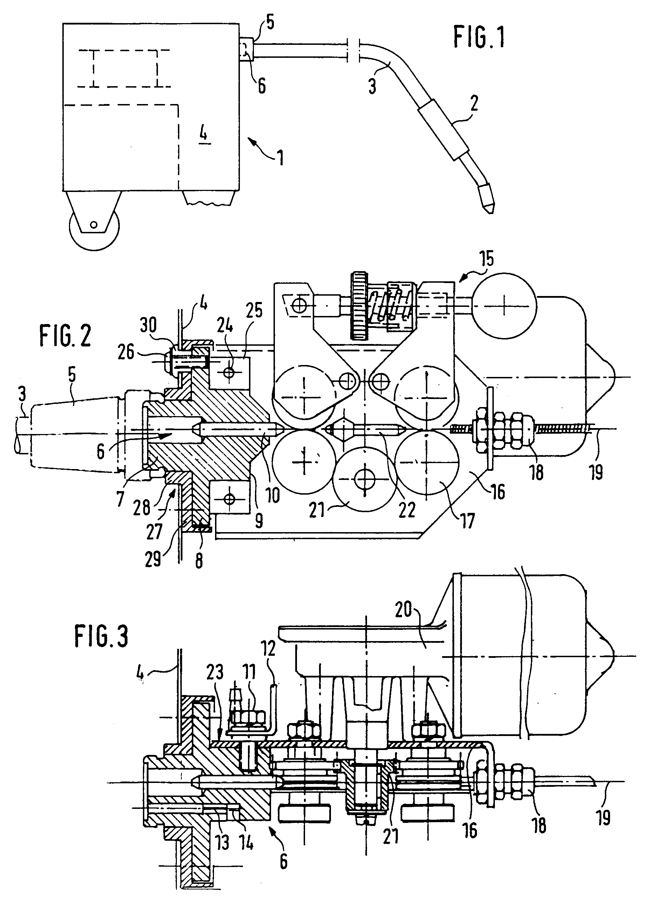

Nachstehend wird ein Ausführungsbeispiel der Erfindung anhand der Zeichnung näher erläutert. Hierbei zeigen:
**Figur 1**
   Eine schematische Ansicht einer elektrischen Schweißmaschine,
**Figur 2**
   eine Ansicht der aus Drahtvorschubeinrichtung und Zentralanschluß bestehenden Baueinheit teilweise im Schnitt und
**Figur 3**
   eine Draufsicht auf die Anordnung gemäß Figur 2 ebenfalls teilweise im Schnitt.

Der Aufbau und die Arbeitsweise einer elektrischen Schweißmaschine erfindungsgemäßer Art sind an sich bekannt und bedürfen daher im vorliegenden Zusammenhang keiner näheren Erläuterung mehr. Die der Figur 1 zugrundeliegende, elektrische Schweißmaschine besteht aus einem Basisgerät 1 und einem Schweißbrenner 2, der am Ende eines Schlauchpakets 3 angeordnet ist. Das Basisgerät 1 besitzt ein auf Rollen fahrbares, kastenförmiges Gehäuse 4, in dem alle zum Schweißen notwendigen Versorgungseinrichtungen, wie Schweißstromquelle, Drahtvorratstrommel, Drahtvorschubeinrichtung etc. untergebracht sind. Der Schweißdraht und alle notwendigen Versorgungs- und Steuerleitungen sind innerhalb des Schlauchpakets 3 zum Schweißbrenner 2 vorgeführt. Das Schlauchpaket 3 ist am hinteren, dem Schweißbrenner 2 gegenüberliegenden Ende mit einer Kupplungsmuffe 5 versehen, die auf einen im Bereich einer Wandung des Gehäuses 4 des Basisgeräts 1 vorgesehenen Zentralanschluß 6 aufsteckbar ist, womit alle Elemente des Schlauchpakets 3 mit den jeweils zugeordneten, basisgeräteseitigen Ausgängen gekuppelt sind.

Der Zentralanschluß 6 enthält, wie die Figuren 2 und 3 zeigen, einen eine zugeordnete Ausnehmung der Stirnwand des Gehäuses 4 durchgreifenden Kupplungszapfen 7, der an einen in in radialer Richtung überragenden Befestigungsflansch 8 anschließt, von dem nach rückwärts, d.h. zur Gehäuseinnenseite hin, ein zapfenförmiger Ansatz 9 absteht, der mit einer zentralen Drahtführung 10 versehen ist. Die Masseleitung läuft ab dem Zentralanschluß 6 über den Schweißdraht selbst. Das den Zentralanschluß 6 bildende Bauteil besteht dementsprechend aus leitendem Material und ist, wie aus Figur 3 erkennbar ist, über eine Klemmschraube 11 mit einer Masseleitung 12 verbunden. Radial außerhalb der zentralen Drahtführung ist der Zentralanschluß 6 mit Steckkupplungselementen 13 für einen Steuerleitung 14 versehen.

Die dem Zentralanschluß 6 vorgeordnete, als ganzes mit 15 bezeichnete Drahtvorschubeinrichtung enthält ein seitliches Lagerschild 16, auf dem hier zwei angetriebene Rollenpaare 17 aufgenommen sind, deren Rollenspalt mit der zentralanschlußseitigen Drahtführung 10 fluchtet und denen eine eingangsseitige, an einer Abwinklung des Lagerschilds 16 befestigte Drahtführung 18 vorgeordnet sein kann, in die der von der hier nicht näher dargestellten Drahtvorratstrommel ablaufende Schweißdraht 19 einläuft. Die unteren Rollen der beiden Rollenpaare 17 sind stationär angeordnet. Die oberen Rollen sind mit einstellbarer Kraft an die jeweils untere Rolle andrückbar.

Die Rollen der beiden Rollenpaare 17 sind, wie Figur 3 weiter zeigt, mittels eines an die rollenferne Seite des Lagerschilds 16 angeflanschten Getriebemotors 20 antreibbar, auf dessen das Lagerschild 16 durchgreifender Welle ein Antriebsrizel 21 aufgenommen ist, das mit mit den unteren Rollen verbundenen Zahnrädern kämmt, die mit mit den oberen Rollen verbundenen Zahnrädern kämmen.

Im dargestellten Beispiel sind, wie oben schon erwähnt, zwei Rollenpaare 17 vorgesehen. Hierbei kann im Bereich zwischen den beiden Rollenpaaren ein Drahtführungsstück 22 vorgesehen sein. In einfachen Fällen wäre es auch denkbar, lediglich ein Rollenpaar vorzusehen.

Das Lagerschild 16 der Drahtvorschubeinrichtung 15 ist an den Zentralanschluß 6, hier an dessen rückwärtigen Ansatz 9 angesetzt und hieran unverrückbar befestigt. Hierzu ist der rückwärtige Ansatz 9, wie Figur 3 weiter erkennen läßt, mit einer seitlichen Anlagefläche 23 versehen, an der das Lagerschild 16 satt anliegt. Zur festen und unverrückbaren Verbindung zwischen Lagerschild 16 und Zentralanschluß sind Stifte bzw. Schrauben 24 vorgesehen, die hier, wie Figur 2 zeigt, an den rückwärtigen Ansatz 9 angeformte Augen 25 durchgreifen. Die Drahtvorschubeinrichtung 15 und der hiermit verbundene Zentralanschluß 6 sind somit unverrückbar miteinander verbunden und bilden dementsprechend eine in sich nicht verstellbare Baueinheit, die vor ihrem Einbau in das Gehäuse 4 komplett vormontierbar ist.

Anstelle der hier vorgesehenen, zweiteiligen Ausführung der genannten Baueinheit wäre es auch denkbar, das Lagerschild 16 und das den Zentralanschluß 6 bildende Bauteil einteilig auszubilden. In diesem Fall müßte dieses einteilige Bauteil, wie im dargestellten Beispiel der Zentralanschluß 6, aus elektrisch leitendem Material bestehen. Die dargestellte Ausführung hat jedoch den Vorteil, daß an das den Zentralanschluß 6 bildende Bauteil unterschiedliche Drahtvorschubeinrichtungen, beispielsweise eine Drahtvorschubeinrichtung mit zwei Rollenpaaren oder eine Drahtvorschubeinrichtung mit nur einem Rollenpaar, angesetzt werden können, so daß auch bei hoher Vielfalt hinsichtlich der Ausbildung der Drahtvorschubeinrichtung 15 eine rationelle Herstellung gewährleistet ist.

Die genannte, aus Drahtvorschubeinrichtung 15 und Zentralanschluß 6 bestehende Baueinheit wird mittels des zentralanschlußseitigen Befestigungsflansches 8 von innen an die zugeordnet Stirnwand des Gehäuses 4 angeflanscht. Zur Befestigung sind Flanschschrauben 26 vorgesehen, mit Hilfe derer der Befestigungsflansch 8 mit der benachbarten Gehäusewand verspannbar ist. Zur Bewerkstelligung einer elektrischen Isolation des Gehäuses 4 gegenüber dem Zentralanschluß 6 ist zwischen diese Bauteile ein Isolierstück 27 eingelegt. Dieses enthält eine auf den flanschseitigen Bereich des Kupplungszapfens 7 aufgezogene Isolierbüchse 28, von der ein am Befestigungsflansch 8 und im montierten Zustand an der benachbarten Gehäusewand anliegender Isolierflansch 29 absteht. Dieser ist hier mit einem den Befestigungsflansch 8 umfassenden Kragen versehen. Zusätzlich sind die Flanschschrauben 26 gegenüber dem Gehäuse 4 isoliert. Hierzu sind in die den Flanschschrauben 26 zugeordneten Löcher des Gehäuses 4 jeweils eine mit einem äußeren Anlageflansch für den zugeordneten Schraubenkopf versehene Isolierbüchse 30 eingesetzt, so daß die mit ihrem Schaft in den Befestigungsflansch 8 eingreifenden Flanschschrauben 26 keine metallische Verbindung mit dem Gehäuse 4 aufweisen.

Das Lochbild des Befestigungsflansches 8 und dementsprechend auch des Isolierstücks 27 entspricht zweckmäßig dem Lochbild einer beim Stand der Technik bereits vorhandenen, den dort vorgesehenen Zentralanschluß 6 umgebenden Kunststoffmuffe. Hierdurch wird erreicht, daß gehäuseseitig keine anderen Bohrungen für die Flanschschrauben 26 benötigt werden, was die Nachrüstung vorhandener Schweißmaschinen mit der erfindungsgemäßen, aus Drahtvorschubeinrichtung 15 und Zentralanschluß 6 bestehenden Baueinheit erleichtert.

## Patentansprüche

1. Schweißvorrichtung, insbesondere Schutzgasschweißvorrichtung, mit einem eine Drahtvorschubeinrichtung (15) enthaltenden Basisgerät (1), das über ein an einem eine Wandausnehmung des Gehäuses (4) des Basisgeräts (1) durchgreifenden, hiergegen isolierten Zentralanschluß (6) anschließbares Schlauchpaket (3) mit einem Schweißbrenner (2) verbindbar ist, **dadurch gekennzeichnet, daß** der Zentralanschluß (6) und die Drahtvorschubeinrichtung (15) gegeneinander unverstellbar zu einer Baueinheit verbunden sind, die mittels eines zentralanschlußseitig vorgesehenen Befestigungsflansches (8) unter Zwischenschaltung einer Isoliereinrichtung (27) an das Gehäuse (4) des Basisgeräts (1) anflanschbar ist.

2. Schweißvorrichtung nach Anspruch 1, **dadurch gekennzeichnet, daß** der den Befestigungsflansch (8) tragende Zentralanschluß (6) an ein die Drahtvorschubeinrichtung (15) aufnehmendes Lagerschild (16) unverrückbar angesetzt ist.

3. Schweißvorrichtung nach Anspruch 1, **dadurch gekennzeichnet, daß** der Befestigungsflansch (8), der Zentralanschluß (6) und ein die Drahtvorschubeinrichtung (15) aufnehmendes Lagerschild (16) einteilig ausgebildet sind.

4. Schweißvorrichtung nach einem der vorhergehenden Ansprüche, **dadurch gekennzeichnet, daß** der Befestigungsflansch (8) von der Gehäuseinnenseite her an das Gehäuse (4) angeflanscht ist.

5. Schweißvorrichtung nach einem der vorhergehenden Ansprüche, **dadurch gekennzeichnet, daß** die Isoliereinrichtung (27) eine einen die Wandausnehmung des Gehäuses (4) durchgreifenden Kupplungszapfen (7) des Zentralanschlusses (6) umgreifende Isolierbüchse (28) aufweist, von der ein am Befestigungsflansch (8) und der benachbarten Gehäusewand anliegender Isolierflansch (29) absteht, und daß die Flanschschrauben (26) gegenüber dem Gehäuse (4) isoliert sind.

6. Schweißvorrichtung nach Anspruch 5, **dadurch gekennzeichnet, daß** in die den Flanschschrauben (26) zugeordneten Löcher des Gehäuses (4) jeweils eine mit einem äußeren Anlageflansch versehene Isolierbüchse (30) eingesetzt ist.

## Claims

1. Welding device, in particular inert gas shielded welding device, with a base tool (1) incorporating a wire feed device (15) and connectable to a welding torch (2) via a flexible tube assembly (3) connectable to a central connection (6) extending through a wall recess of the housing (4) of the base tool (1) and insulated therefrom, characterized in that the central connection (6) and the wire feed device (15) are fixed relative to each other to form a module which can be flange-mounted to the housing (4) of the base tool (1) by means of a mounting flange (8) provided at the central connection with the insertion of an insulating device (27).

2. Welding device according to Claim 1, characterized in that the mounting flange (8) supporting the central connection (6) is immovably attached to an end plate (16) housing the wire feed device (15).

3. Welding device according to Claim 1, characterized in that the mounting flange (8), the central connection (6) and the end plate (16) housing the wire feed device (15) are designed as a single part.

4. Welding device according to any of the preceding claims, characterized in that the mounting flange (8) is flange-mounted to the housing (4) from the inside of the housing.

5. Welding device according to any of the preceding claims, characterized in that the insulating device (27) has an insulating bush (28) encompassing a coupling spigot (7) of the central connection (6) extending through the wall recess of the housing (4), from which insulating bush projects an insulating flange (29) contacting the mounting flange (8) and the adjacent housing wall, and in that the flange bolts (26) are insulated from the housing (4).

6. Welding device according to Claim 5, characterized in that an insulating bush (30) with an external locating flange is installed in each hole provided in the housing (4) for the flange bolts (26).

## Revendications

1. Appareil de soudage, en particulier dispositif de soudage sous atmosphère d'un gaz de protection, comprenant un appareil de base contenant un mécanisme d'avance de fil (15), qui peut être relié à un chalumeau de soudage via un ensemble de tuyaux souples (3) qui peut être relié à un raccord central (6) traversant un évidement pratiqué dans la paroi du logement (4) de l'appareil de base (1) et qui est isolé par rapport à ce dernier, caractérisé en ce que le raccord central (6) et le mécanisme d'avance de fil (15) sont reliés de manière mutuellement fixe à une unité modulaire apte à venir se brider contre le logement (4) de l'appareil de base (1) au moyen d'une bride de fixation (8) prévue du côté du raccord central, en intercalant un mécanisme d'isolation (27).

2. Appareil de soudage selon la revendication 1, caractérisé en ce que le raccord central (6) portant la bride de fixation (8) est disposé de façon à ne pas pouvoir reculer contre une flasque (16) dans laquelle vient se loger le dispositif d'avance de fil (15).

3. Appareil de soudage selon la revendication 1, caractérisé en ce que la bride de fixation (8), le raccord central (6) et une flasque (16) dans laquelle vient se loger le mécanisme d'avance de fil (15) sont réalisés en une seule pièce.

4. Appareil de soudage selon l'une quelconque des revendications précédentes, caractérisé en ce que la bride de fixation (8) est bridée au logement (4) à partir du côté interne du logement.

5. Appareil de soudage selon l'une quelconque des revendications précédentes, caractérisé en ce que le mécanisme d'isolation (27) présente une douille d'isolation (28) enserrant un tourillon d'accouplement (7) du raccord central (8), qui traverse l'évidement pratiqué dans la paroi du logement (4), douille dont s'écarte une bride d'isolation (29) qui vient se disposer contre la bride de fixation (8) et contre la paroi de logement voisine, et en ce que les boulons (26) destinés à l'assemblage par bride sont isolés par rapport au logement (4).

6. Appareil de soudage selon la revendication 5, caractérisé en ce que, dans les trous du logement (4) attribués aux boulons (26) destinés à l'assemblage par bride, est insérée respectivement une douille d'isolation munie d'une bride d'appui externe.
